# EUROPÄISCHE PATENTSCHRIFT

(11) **EP 2 723 629 B1**
(45) Veröffentlichungstag und Bekanntmachung des Hinweises auf die Patenterteilung: **16.11.2016**
(21) Anmeldenummer: 12724907.6
(22) Anmeldetag: 24.05.2012
(51) Int. Cl.: B62D 33/06

(54) **STRAßENBAUMASCHINE**
ROAD-BUILDING MACHINE
MACHINE POUR TRAVAUX ROUTIERS

(30) Priorität: 25.06.2011 DE 102011105556
(43) Veröffentlichungstag der Anmeldung: 30.04.2014
(73) Patentinhaber: ABG Allgemeine Baumaschinen-Gesellschaft mbH, 31785 Hameln (DE)
(72) Erfinder: LEMKE, Bernd, 37186 Moringen (DE); NEUHAUS, Michael, 31840 Hess-Oldendor (DE)
(74) Vertreter: Henseler, Daniela
(86) Internationale Anmeldenummer: PCT/EP2012/002235
(87) Internationale Veröffentlichungsnummer: WO 2013/000530

(56) Entgegenhaltungen:
- EP-A2- 2 166 154
- BE-A- 734 792

## Beschreibung

Die Erfindung betrifft eine Straßenbaumaschine mit einem fahrbaren Chassis und einem oberhalb eines Führerstandes schwenkbar an dem Chassis angeordneten Schutzdach nach dem Oberbegriff des Anspruchs 1.

Aus EP 2 166 154 A2 ist ein derartiger Schutzdachaufbau für einen Führerstand einer Baumaschine bekannt. Das Schutzdach ist auf wenigstens einem vorderen Rahmenteil und auf wenigstens einem hinteren Rahmenteil angeordnet, wobei die Rahmenteile schwenkbar an der Baumaschine angeordnet sind, so dass der Schutzdachaufbau einklappbar und ausklappbar ist, um diesen wahlweise in eine Arbeitsstellung oder in eine Transportstellung bringen zu können. Damit der Schutzdachaufbau auch die seitlich äußeren Bereiche eines Führerstandes abdeckt, sind seitlich ausziehbare Schutzdachüberstände vorgesehen oder das komplette Schutzdach ist relativ zur Baumaschine seitlich verschiebbar angeordnet. Hierbei handelt es sich aber nur um Behelfslösungen. Nachteilig ist, dass der Dachaufbau im Arbeitsbetrieb hinderlich sein kann.

AUS BE 734 792 A1 ist bekannt, dass das abgesenkte Schutzdach für eine Arbeitsstellung mit verminderter Aufbauhöhe einen Freiraum für eine Bedienperson im Bereich des Bedienpultes des Führerstandes ausbildet. Dazu ist ein das Bedienpult überdeckender Schutzdachabschnitt relativ zum Chassis verschiebbar ausgebildet.

Aus DE 296 09 704 U1 ist ein Straßenfertiger mit einem Schutzdach bekannt, das mit nur zwei Stützen am Chassis gehalten ist. Dadurch ergibt sich ein besserer Zugang zum Führerstand. Für den Transport des Straßenfertigers können die Stützen mit dem Schutzdach in Fahrtrichtung und/oder gegen die Fahrtrichtung, d.h. nach vorne oder nach hinten, in die Transportrichtung verschwenkt werden. Die Transporthöhe des Straßenfertigers, z.B. für einen Transport auf einem Tieflader, kann so reduziert werden. Jede Stütze kann zusätzlich bogenförmig gekrümmt sein, um eine optimal niedrige Transporthöhe in der Transportposition zu erreichen. Als Schwenkverstellantrieb kann ein Hydraulikzylinder vorgesehen sein, der sehr bequem ferngesteuert werden kann. Nachteilig ist, dass das Schutzdach im Arbeitsbetrieb hinderlich sein kann.

Aus DE 20 2007 005 756 U1 ist eine selbstfahrende Baumaschine, insbesondere eine Straßenfräsmaschine, bekannt, bei der der Fahrerstand vorzugsweise von einer Wetterschutzeinrichtung umgeben ist, die gemeinsam mit dem Fahrerstand verfahrbar ist. Dabei kann die Wetterschutzeinrichtung aus einer Kabine bestehen. Die Kabine ist zum Transport vorzugsweise zusammenfaltbar oder versenkbar oder umklappbar, damit die maximale Transportabmessung der Baumaschine bei einem Transport auf einem Tieflader für Brückenunterführungen gering gehalten werden kann. Die Kabine ist beispielsweise um eine parallel zur Fahrtrichtung verlaufende Achse umklappbar, wenn ihre Breite quer zur Fahrtrichtung erheblich schmaler als ihre Höhe ist. Nachteilig ist auch hier, dass die Kabine im Arbeitsbetrieb hinderlich sein kann.

Aus DE 92 06 935 U1 ist ein fahrbarer Deckenfertiger bekannt, der eine Führerkabine aufweist, die in eine Transportlage umlegbar ist, um mit ihrem Umriss innerhalb der zulässigen Transporthöhe zu bleiben, wenn der Deckenfertiger auf einen Tieflader aufgeladen ist. Nachteilig ist wiederum, dass die Führerkabine im Arbeitsbetrieb stören kann.

Der Erfindung liegt daher die Aufgabe zugrunde, eine Straßenbaumaschine zu schaffen, die für den Arbeitsbetrieb als auch den Transportbetrieb mit einem einfach und bequem handhabbaren Schutzdach ausgestattet ist.

Diese Aufgabe wird durch die Merkmale des Anspruchs 1 gelöst. Hierdurch wird eine Straßenbaumaschine mit einem Schutzdach geschaffen, das dem Maschinisten einen maximalen Wetterschutz und maximale Bewegungsfreiheit im Arbeitsbetrieb bietet. Zum Transport der Straßenbaumaschine kann das Schutzdach heruntergeklappt werden. Die Straßenbaumaschine ist darüber hinaus erfindungsgemäß mit eingeklapptem Schutzdach vom Führerstand aus sicher bedienbar. Für eine Bedienperson bzw. einen Maschinisten bleibt ein hinreichender Arbeitsraum. Die Straßenbaumaschine kann dann unter Hindernissen, die einen geringeren Höhenaufbau verlangen, im Arbeitsbetrieb oder einem Rangierbetrieb eingesetzt werden. Die Manövrierbarkeit der Straßenbaumaschine im Bereich von Höhenbeschränkungen, wie dies beispielsweise Bäume, Büsche, Brücken und andere Hindernisse verursachen, wird dadurch deutlich verbessert. Dabei wird der für den Transportbetrieb eingeklappte Zustand des Schutzdaches genutzt, um zusätzliche Schwenkbewegungen des Schutzdaches vermeiden zu können. Ferner wird die Handhabung des Schutzdaches einfach gehalten, wenn das Schutzdach nur zwischen zwei Klappstellungen, nämlich einerseits ausgeklappt und andererseits eingeklappt, verschwenkbar ist.

Das Schutzdach ist als eine mehrteilige Dachschale ausgebildet, deren Dachschalensegmente zueinander verschiebbar sind. Die Dachschalensegmente liegen nicht auf gleicher Höhe, was eine Verschiebung derselben übereinander ermöglicht. Ein solches Dachschalensegment kann einen das Bedienpult überdeckenden Schutzdachabschnitt bilden. Ein Wegschieben eines solchen Schutzdachabschnitts führt dann zu einer Verkürzung der Dachlänge in seitlicher Richtung, vorzugsweise quer zur Fahrtrichtung. Ein Überstand des Schutzdaches an der Verkürzungsseite gegenüberliegenden Seite wird dadurch vermieden.
Weiterhin kann das Schutzdach mittels Dachschalensegmenten derart ausgebildet sein, dass das Schutzdach beidseitig in seitlicher Richtung verkürzbar ist. Ein mittleres, vorzugsweise feststehendes Dachschalensegment besitzt dabei vorzugsweise eine Dachlänge in seitlicher Richtung, die größer oder mindestens gleich groß ist wie die Länge der Dachschalensegmente, die unter oder über das mittlere Dachschalensegment verschiebbar sind. Alternativ können die Dachschalensegmente ein Lamellendach bilden, deren Lamellen übereinander und gegebenenfalls gegeneinander verschiebbar am Chassis der Straßenbaumaschine angeordnet sein können. Die Dachschalensegmente können dabei mit unterschiedlichen Längen in seitlicher Richtung ausgebildet sein.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine perspektivische Ansicht schräg von vorne rechts eines an einem fahrbaren Chassis einer Straßenbaumaschine befestigten Schutzdaches in einer Arbeitsstellung mit ausgeklapptem Schutzdach,
Fig. 2 zeigt schematisch eine perspektivische Ansicht schräg von vorne links des an dem fahrbaren Chassis einer Straßenbaumaschine befestigten Schutzdaches in der Arbeitsstellung gemäß Fig. 1,
Fig. 3 zeigt schematisch eine Vorderansicht des an dem fahrbaren Chassis der Straßenbaumaschine befestigten Schutzdaches in der Arbeitsstellung gemäß Fig. 1 und Fig. 2,
Fig. 4 zeigt schematisch eine Seitenansicht des an dem fahrbaren Chassis der Straßenbaumaschine befestigten Schutzdaches in der Arbeitsstellung gemäß Fig. 1, Fig. 5 ist ein Schnitt A-A nach Fig. 4,
Fig. 6 zeigt schematisch eine perspektivische Ansicht schräg von vorne rechts des an dem fahrbaren Chassis einer Straßenbaumaschine befestigten Schutzdaches in einer Transportstellung,
Fig. 7 zeigt schematisch eine Seitenansicht des an dem fahrbaren Chassis der Straßenbaumaschine befestigten Schutzdaches in der Transportstellung gemäß Fig. 6,
Fig. 8 zeigt schematisch eine perspektivische Ansicht schräg von vorne rechts des an dem fahrbaren Chassis einer Straßenbaumaschine befestigten Schutzdaches in der Arbeitsstellung mit einem weggeschobenen Schutzdachabschnitt,
Fig. 9 zeigt schematisch eine perspektivische Ansicht schräg von vorne rechts des an dem fahrbaren Chassis einer Straßenbaumaschine befestigten Schutzdaches in einer Arbeitsstellung mit eingeklapptem Schutzdach und mit einem weggeschobenen Schutzdachabschnitt,
Fig. 10 ist ein Querschnitt des Schutzdaches gemäß Fig. 8 und Fig. 9,
Fig. 11 zeigt schematisch eine perspektivische Ansicht schräg von vorne rechts des an dem fahrbaren Chassis einer Straßenbaumaschine befestigten Schutzdaches in einer Arbeitsstellung mit ausgeklapptem Schutzdach und seitlich ausgezogenen Dachschalensegmenten,
Fig. 12 zeigt schematisch eine perspektivische Ansicht schräg von vorne links des an dem fahrbaren Chassis einer Straßenbaumaschine befestigten Schutzdaches in der Arbeitsstellung gemäß Fig. 11,
Fig. 13 zeigt schematisch eine Vorderansicht des an dem fahrbaren Chassis der Straßenbaumaschine befestigten Schutzdaches in der Arbeitsstellung gemäß Fig. 11 und Fig. 12,
Fig. 14 ist ein Querschnitt des Schutzdaches gemäß Fig. 12 und Fig. 13,
Fig. 15 und Fig. 16 zeigen eine Ansicht eines Ausführungsbeispiels eines Chassis mit einer teleskopierbaren Stütze zur Anordnung des Schutzdaches,
Fig. 17 und Fig. 18 zeigen eine Ansicht von Ausführungsbeispielen eines Chassis mit einem Schwenk-Schiebemechanismus zum Verstellen des Schutzdaches,
Fig. 19 zeigt eine Ansicht eines an dem Chassis befestigten Schutzdaches mit Dachschalensegmenten für einen links und/oder rechts gesteuerten Betrieb einer Straßenbaumaschine,
Fig. 20 bis Fig. 23 zeigen Querschnitte des Schutzdaches gemäß Fig. 19 mit verschiedenen Stellungen von Dachschalensegmenten der Dachschale des Schutzdaches.

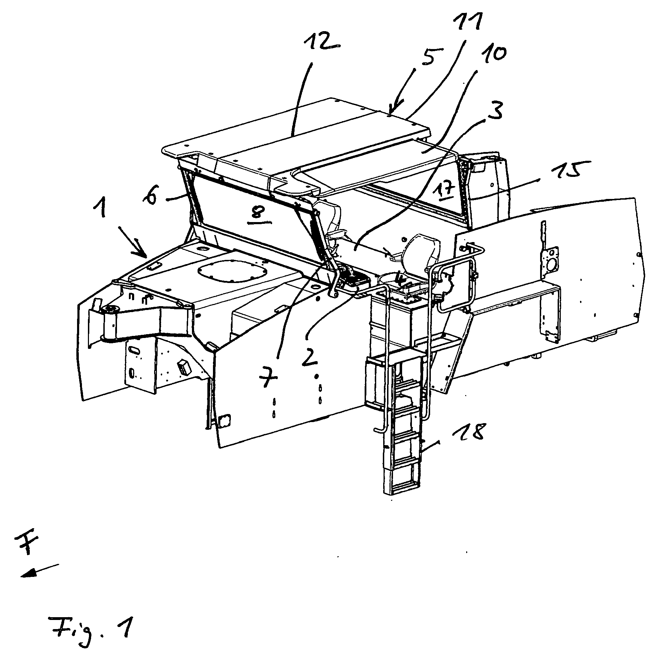

Wie Fig. 1 zeigt, betrifft die Erfindung eine Straßenbaumaschine mit einem fahrbaren Chassis 1, an dem ein ein Bedienpult 2 aufweisender Führerstand 3 vorgesehen ist. Vom Führerstand 3 aus wird die Straßenbaumaschine von einer Bedienperson bzw. einem Maschinisten (nicht dargestellt) gesteuert, wozu hinter dem Bedienpult vorzugsweise ein Fahrersitz 4 vorgesehen ist. Die Fahrtrichtung der Straßenbaumaschine ist mit F gekennzeichnet. Die Straßenbaumaschine kann ein Straßenfertiger, eine Straßenfräse, eine Straßenwalze oder dergl. sein.

Oberhalb des Führerstandes 3 ist ein Schutzdach 5 angeordnet, das mit mindestens einer Stütze 6 verstellbar am Chassis 1 angeordnet ist, so dass das Schutzdach 5 für eine Transportstellung absenkbar und für eine Arbeitsstellung aufstellbar ist. Gemäß dem in Fig. 1 dargestellten Ausführungsbeispiel ist das Schutzdach 5 beispielsweise mit beidseitigen Stützen 6, 7 am Chassis 1 festgelegt. Die Stützen 6, 7 sind schwenkbar am Chassis 1 angeordnet, so dass das Schutzdach 5 für eine Transportstellung einklappbar und für eine Arbeitsstellung ausklappbar ist. Die Klappbewegung erfolgt beispielsweise in mindestens einer Fahrtrichtung F.

Fig. 1 zeigt das Schutzdach 5 in ausgeklappter Arbeitsstellung, bei der für eine Bedienperson ein wettergeschützter Arbeitsraum im Führerstand 3 geschaffen wird. Das ausgeklappte Schutzdach 5 bedingt eine Aufbauhöhe, wobei es über die Länge der Stützen 6, 7 eingestellt werden kann. Die Stützen 6, 7 können in einem Rahmen für eine Frontscheibe 8 integriert sein.

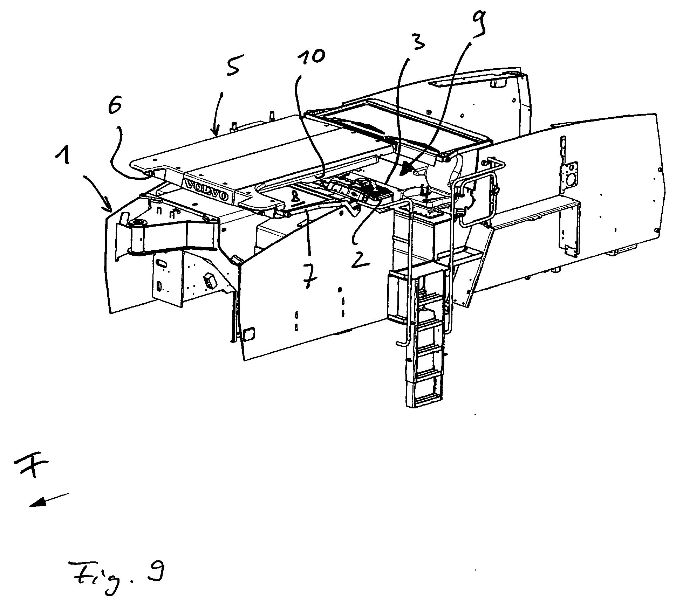

Wie Fig. 9 zeigt, bildet das eingeklappte Schutzdach 5 für eine Arbeitsstellung mit verminderter Aufbauhöhe einen Freiraum 9 für eine Bedienperson im Bereich des Bedienpultes 2 des Führerstandes 3 aus, wozu ein das Bedienpult 2 überdeckender Schutzdachabschnitt, vorzugsweise ein Dachschalensegment 10, relativ zum Chassis 1 verschiebbar ausgebildet ist. Das Schutzdach 5 ist dazu über den verschiebbaren Schutzdachabschnitt vorzugsweise seitlich verkürzbar. Alternativ (nicht dargestellt) kann das Schutzdach 5 als Ganzes im eingeklappten Zustand verschoben angeordnet sein, was dann allerdings zur Folge hat, dass das Schutzdach 5 an der dem gebildeten Freiraum 9 gegenüberliegenden Seite einen Überstand zum Chassis 1 ausbildet.

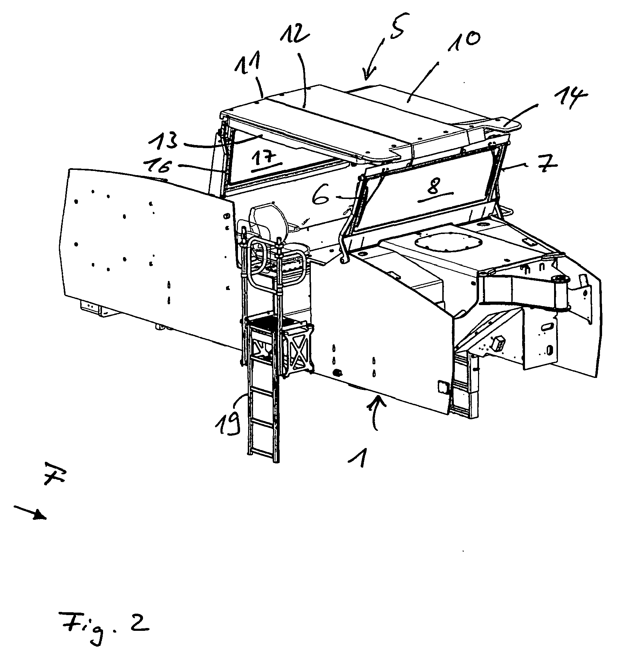

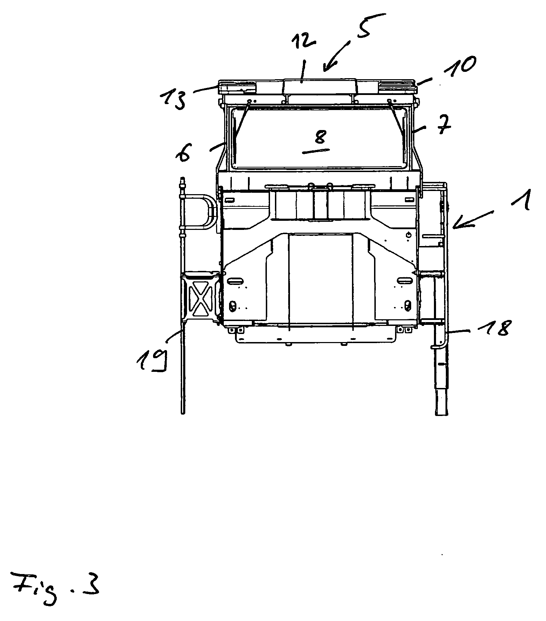

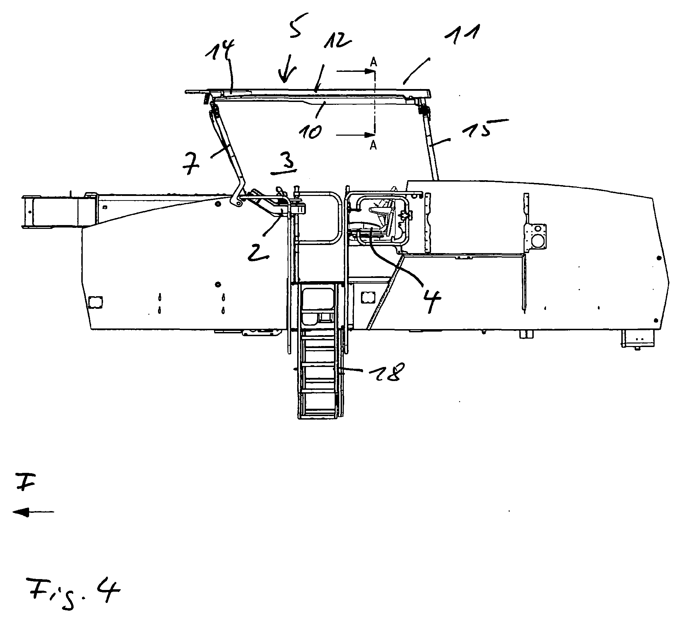

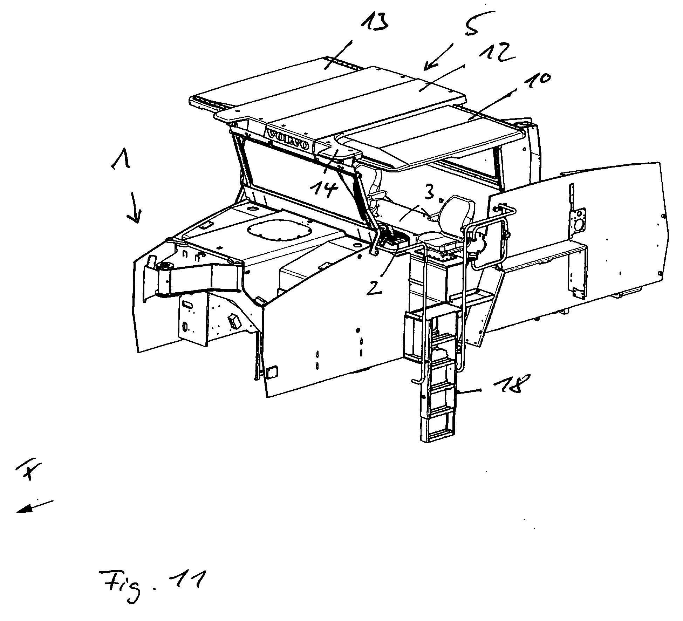

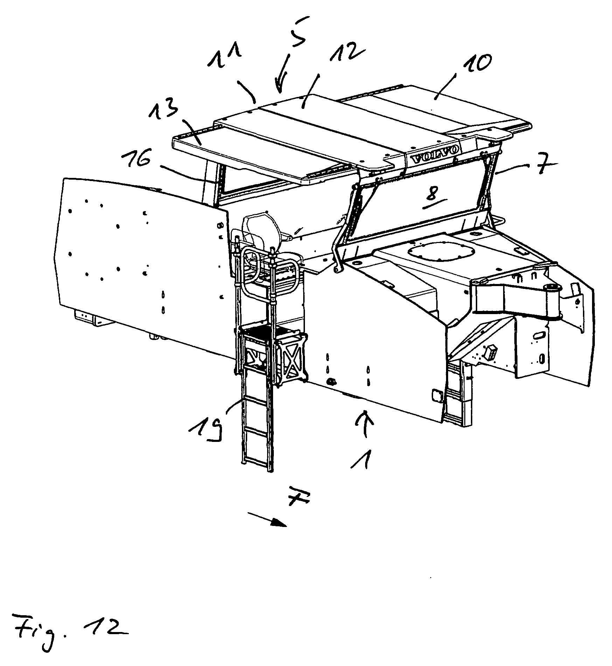

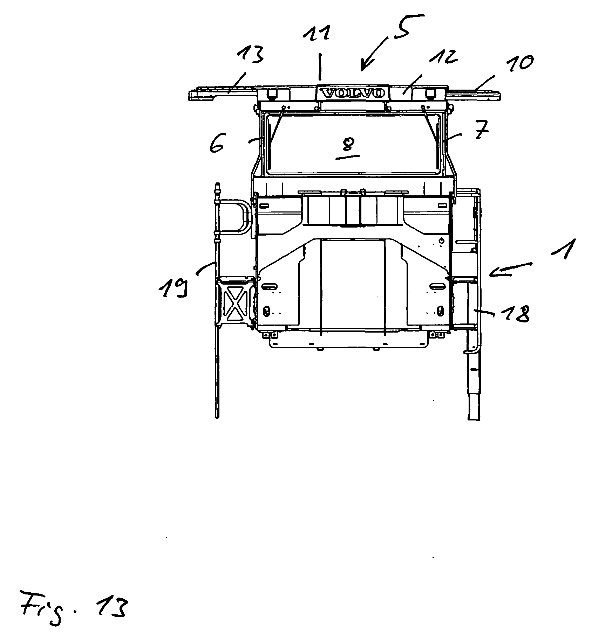

Die Fig. 1 bis Fig. 5 zeigen das Schutzdach 5 in der ausgeklappten Arbeitsstellung. Die wirksame seitliche Dachlänge des Schutzdaches 5 ist vorzugsweise quer zur Fahrtrichtung F ausgerichtet. Das Schutzdach 5 weist eine mindestens zweiteilige Dachschale 11 auf. Der verschiebbare Schutzdachabschnitt bildet ein Dachschalensegment 10, das mit mindestens einem zweiten Dachschalensegment 12 eine Dachlänge in seitlicher Richtung bestimmt. Der Schutzdachabschnitt als Dachschalensegment 10 und das mindestens zweite Dachschalensegment 12 sind zueinander verschiebbar. Vorzugsweise erfolgt die Anordnung nicht auf gleicher Höhe, was eine Verschiebung derselben übereinander ermöglicht. Der Schutzdachabschnitt als Dachschalensegment 10 ist einziehbar und gegebenenfalls auch ausziehbar, wie nachfolgend unter Verweis auf Fig. 11 bis Fig. 14 noch beschrieben wird.

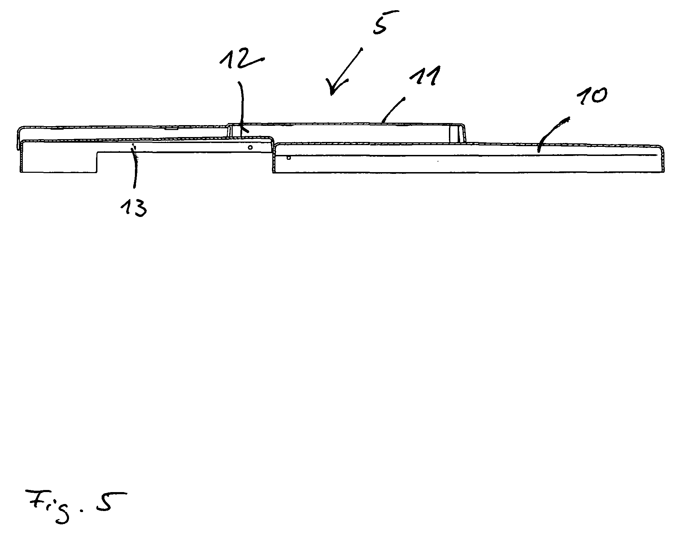

Das zweite Dachschalensegment 12 ist vorzugsweise als mindestens ein mittleres Dachschalensegment feststehend angeordnet, gegenüber dem seitlich verschiebbar angeordnete Dachschalensegmente angeordnet sind. Ein seitlich verschiebbares Dachschalensegment 10 ist der Schutzdachabschnitt. Ein weiteres gegenüber dem zweiten, vorzugsweise mittleren Dachschalensegment 12 verschiebbares drittes Dachschalensegment 13 kann vorgesehen sein, das als ein seitlicher Überstand wahlweise ausziehbar ist. Wie Fig. 5 zeigt, sind diese Dachschalensegmente 10, 12, 13 der Dachschale 11 auf unterschiedlichen Führungsebenen verschiebbar angeordnet.

Der Schutzdachabschnitt als Dachschalensegment 10 kann vorderseitig an einem Führungskragen 14 geführt sein, um die Halterung des Schutzdachabschnitts zur Überdeckung des Führerstandes 3 bei der Arbeitsstellung des ausgeklappten Schutzdaches 5 zu verbessern.

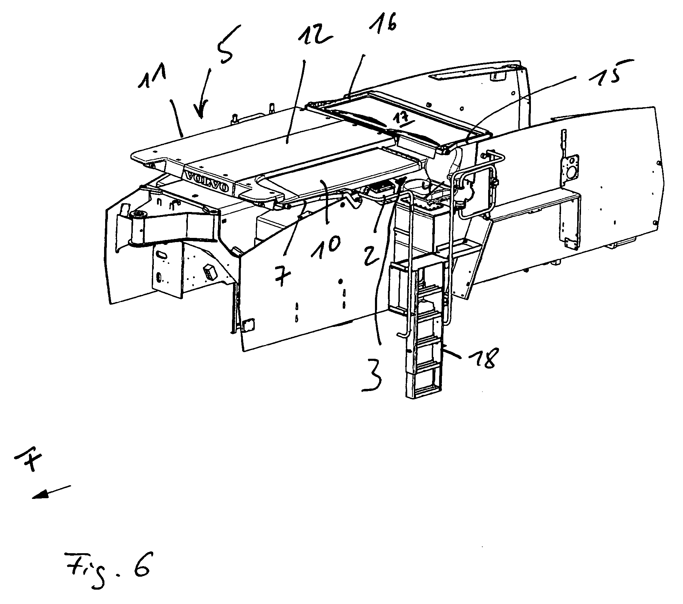

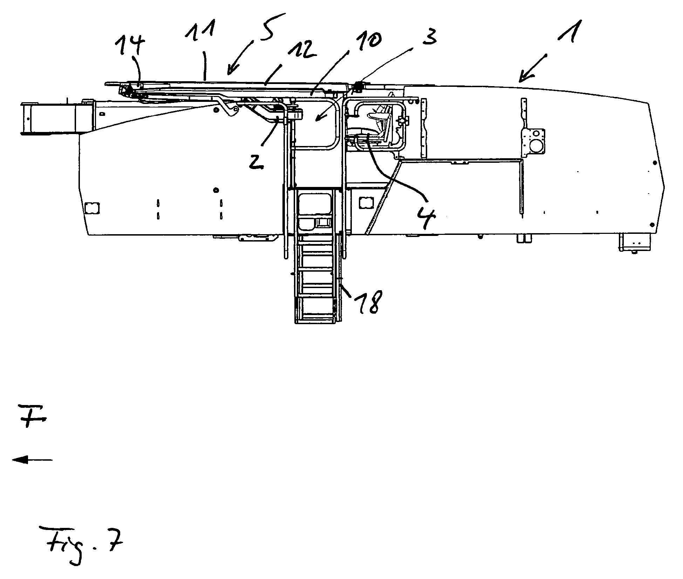

Die Fig. 6 und Fig. 7 zeigen das Schutzdach 5 in der eingeklappten Transportstellung, wobei der Schutzdachabschnitt als Dachschalensegment 10 das Bedienpult 2 abdeckt und damit für einen Transport der Straßenbaumaschine dieses als Abdeckung schützt. Das Schutzdach 5 kann rückseitig an Stützen 15, 16 angeordnet sein, die in einem Rahmen zur Aufnahme einer Rückscheibe 17 integriert sein können.

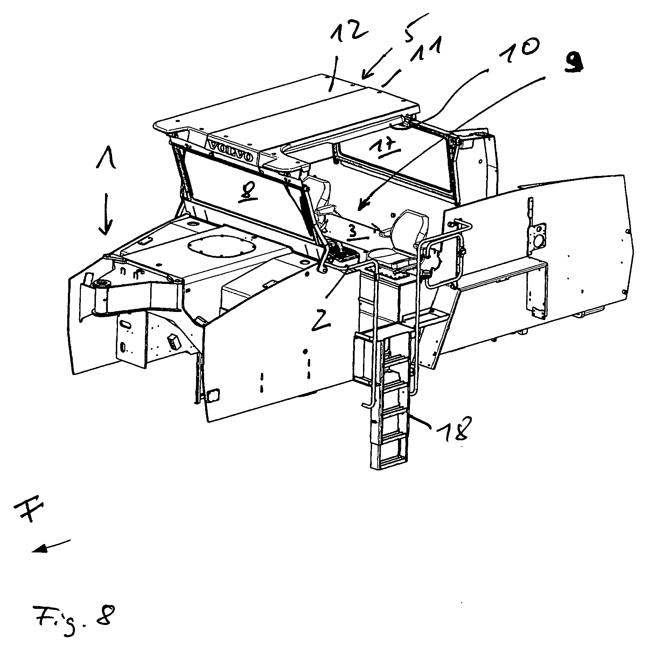

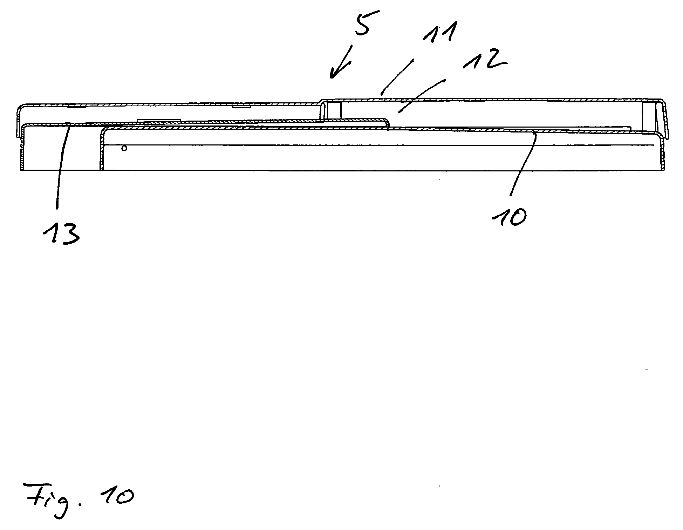

Die Fig. 8 bis Fig. 10 zeigen das Schutzdach 5 mit einem relativ zum Chassis 1 seitlich verschobenen Dachschalensegment 10 als Schutzdachabschnitt, wodurch ein Freiraum 9 für eine Bedienperson (nicht dargestellt) im Bereich des Bedienpults 2 des Führerstandes 3 gebildet wird. Dieser Freiraum 9 kann bei ausgeklapptem Schutzdach 5 ausgebildet werden. Ausbildbar ist dieser Freiraum 9 aber immer im Betrieb, wenn das Schutzdach 5 eingeklappt ist, wie dies in Fig. 9 dargestellt ist. Einer Bedienperson liefert dieser Freiraum 9 hinreichend Platz, um das Bedienpult 2 bedienen und damit die Straßenbaumaschine bedienen und/oder manövrieren zu können. Die Übereinanderanordnung der Segmente 10, 12, 13 der Dachschale 11 des Schutzdaches 5 ist in Fig. 10 dargestellt. Das Schutzdach 5 ist somit verkürzbar in seitlicher Richtung durch Wegschieben eines Teilbereichs, d.h. Dachschalensegment 10, wodurch die Überdeckung im Bereich des Bedienpultes 2 entfällt. Das so verkürzte Schutzdach 5 kann aus einem ausgeklappten Zustand (Fig. 8) in einen eingeklappten Zustand (Fig. 9) überführt werden.

Die Fig. 11 bis 14 zeigen ein Ausführungsbeispiel, bei dem das Schutzdach 5 mit seitlichen Überständen ausbildbar ist. Dazu ist das Schutzdach 5 über das verschiebbare Dachschalensegment 10 als Schutzdachabschnitt seitlich verlängerbar gegenüber beispielsweise einer Dachgrundlänge, die den Führerstand 3 überdeckt, aber nicht seitliche Ausstiege bzw. Einstiege 18, 19. Mit den Überständen, die das Schutzdach 5 seitlich zeitweilig verlängern, können diese Einstiege ebenfalls überdacht werden. Die Überstände werden gebildet durch ein ausziehbares Dachschalensegment 10 und das weitere ausziehbare Dachschalensegment 13.

Die Fig. 5, Fig. 10 und Fig. 14 zeigen den Versatz der Führungsebenen in der Höhe für die Dachschalensegmente 10, 12 und 13 der Dachschale 11. Fig. 5 zeigt die Anordnung der Dachschalensegmente 10, 12 und 13, wobei das Dachschalensegment 10 für eine Arbeitsstellung und eine Transportstellung den Führerstand 3 oberhalb des Bedienpultes 2 abdeckt. Die Fig. 10 zeigt die Anordnung der Dachschalensegmente 10, 12, 13, wobei das Dachschalensegment 10 unter das Dachschalensegment 12 geschoben ist, um den Freiraum 9 im Bereich des Führerstandes 3 zu bilden, damit eine Bedienperson das Bedienpult 2 bedienen kann. Das dritte Dachschalensegment 13, das zur Ausbildung eines seitlichen Überstandes dient, ist so positioniert, dass dessen Führungsebene zwischen der des mittleren Dachschalensegments 12 und des Dachschalensegments 10 angeordnet ist. Das Dachschalensegment 10 ist der das Bedienpult 2 überdeckende Schutzdachabschnitt. Diese Anordnung kann das Schutzdach 5 einnehmen, wenn das Schutzdach ausgeklappt oder eingeklappt ist. Insbesondere ist diese Anordnung vorgesehen, wenn das Schutzdach 5 eingeklappt ist, damit die Maschine mit geringerer Aufbauhöhe einen Arbeitsbetrieb und/oder Manövrierbetrieb ausführen kann.

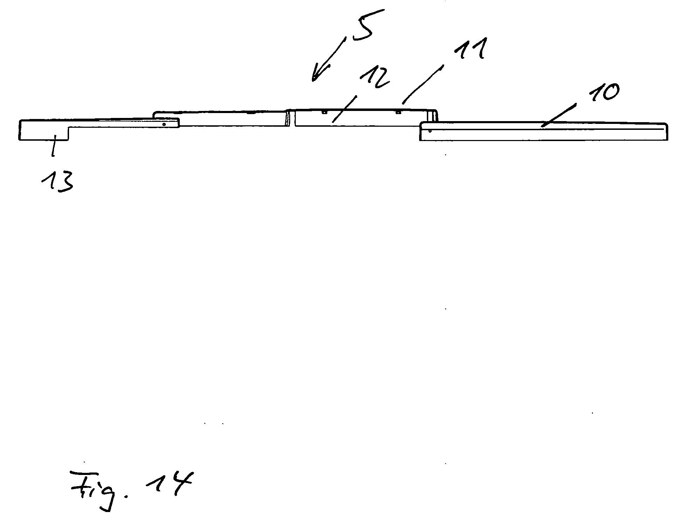

Die Fig. 14 zeigt die Anordnung der Dachschalensegmente 10, 12 und 13, bei der das Dachschalensegment 10 den Führerstand 3 im Bereich des Bedienpultes 2 und des Einstiegs 18 überdeckt. An der gegenüberliegenden Seite wird das Schutzdach 5 verlängert durch einen ausgezogenen Überstand, der durch das verschiebbare Dachschalensegment 13 gebildet wird. Die vorstehenden Figuren verdeutlichen, dass die Anordnung der Dachschalensegmente 10, 12, und 13 übereinander in unterschiedlichen Höhenlagen eine bedarfsbezogene Verlängerung oder Verkürzung der Dachschale 11 in seitlicher Richtung erlauben. Es wird quasi ein Paket aus übereinander schichtbaren Dachschalensegmenten 10, 12, 13 gebildet, von denen wahlweise die Dachschalensegmente ein- und ausziehbar sind. Dabei ist wesentlich, dass das Schutzdach 5 mit dem eingefahrenen Dachschalensegment 10 einklappbar ist.

Bei den in den Fig. 1 bis Fig. 14 dargestellten Ausführungsbeispielen einer Straßenbaumaschine mit einem Schutzdach 5 umfasst die Dachschale 11 vorzugsweise drei Dachschalensegmente 10, 12, 13.

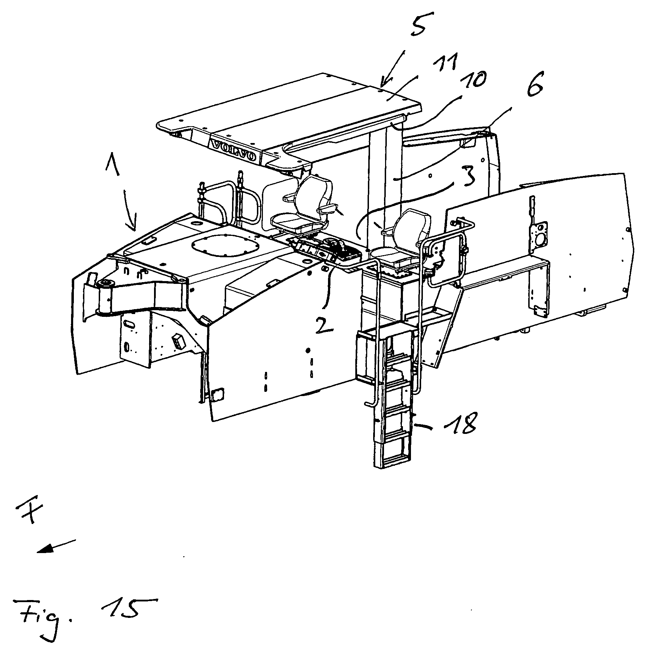

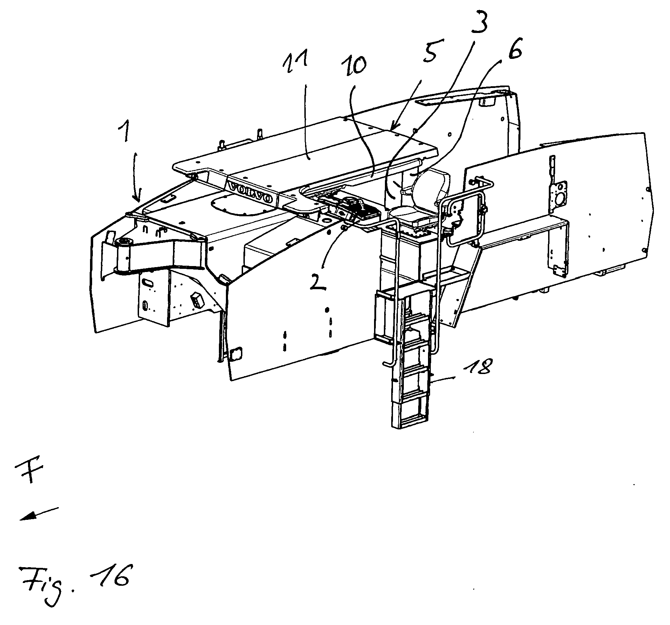

Fig. 15 und Fig. 16 zeigen ein weiteres Ausführungsbeispiel der Erfindung, wobei das Schutzdach 5 mittels einer telekopierbaren Stütze 6 verstellbar ist, um das Schutzdach 5 aufstellen und absenken zu können. Fig. 15 zeigt das Schutzdach 5 mit aufgestelltem Schutzdach. Fig. 16 zeigt das Schutzdach mit abgesenktem Schutzdach 5. Die Teleskopierbarkeit unter Verwendung von mindestens einer Stütze 6 ermöglicht ein Ein- und Ausfahren der Stütze 6, wodurch deren Höhe und damit die Höhenverstellung des Schutzdaches 5 gegenüber dem Führerstand 3 einstellbar ist. Die Stütze 6 kann dabei auch mit abknickbaren Gelenken versehen sein. Im Übrigen gelten die vorstehenden Ausführungen zu den vorstehend beschrieben Ausführungsbeispielen entsprechend.

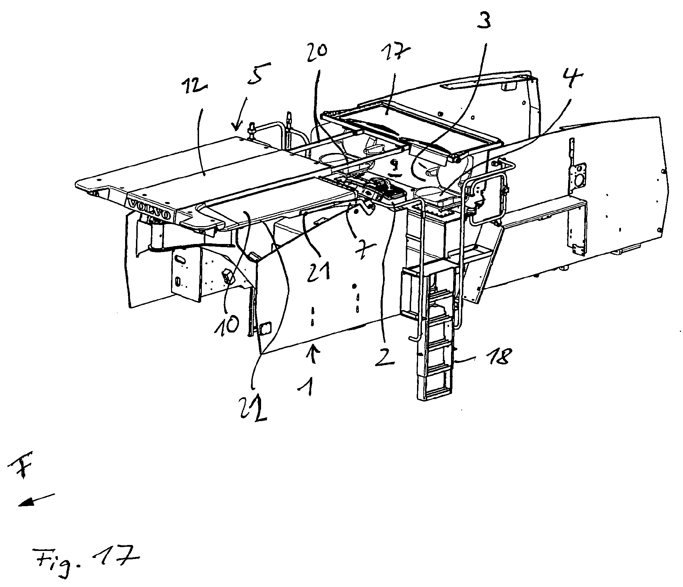

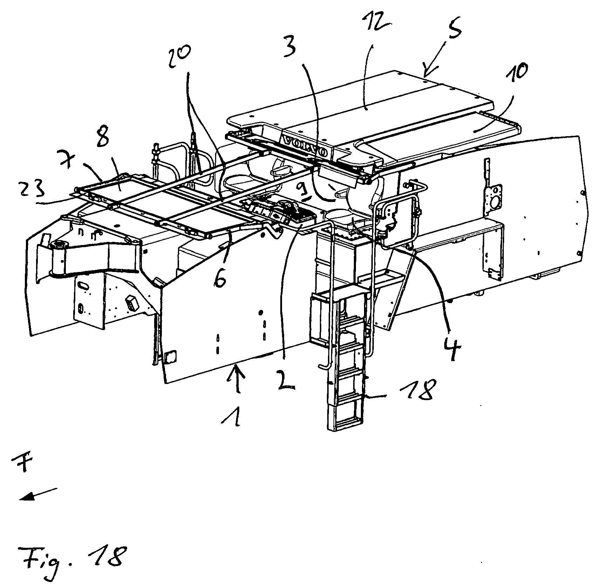

Fig. 17 und Fig. 18 zeigen Ausführungsbeispiele eines Chassis 1 mit einem Schwenk-Schiebemechanismus zum Verstellen des Schutzdaches 5. Fig. 17 zeigt das Schutzdach 5 in einem eingeklappten Zustand. Das Dachschalensegment 10, das den Schutzdachabschnitt bildet, der das Bedienpult 2 an der linken Seite überdeckt, ist verschiebbar ausgebildet, um bei dem abgesenkten Schutzdach 5 einen Freiraum 9 für eine Bedienperson zu schaffen. Die Verschiebbarkeit ist gegeben durch eine translatorische Verschiebbarkeit des vorzugsweise gesamten Schutzdaches 5 z.B. in einer Vorwärts- und Rückwärtsrichtung in Bezug auf die Fahrtrichtung F. Dazu kann eine Halterung 20 vorgesehen sein, die auf das Schutzdach 5 verschiebbar gegenüber dem Chassis 1 geführt ist. Fig. 17 zeigt die Verschiebung des Schutzdaches 5 in einer Vorwärtsrichtung. Die Anlenkung der Stützen 6, 7 kann dazu in einer Führung 22 gleiten. Ein Abstand wird so geschaffen zwischen dem Schutzdach 5 und der Rückscheibe 17, und der Abstand ist dort gebildet, wo der Freiraum 9 für eine Bedienperson zu schaffen ist bei abgesenktem Schutzdach 5. Fig. 18 zeigt die Verschiebung des Schutzdaches 5 in einer Rückwärtsrichtung. Ein Abstand wird so geschaffen zwischen dem Schutzdach 5 und der Frontscheibe 8, um den Freiraum 9 zu bilden. Die Stützen 6, 7 zum Anordnen des Schutzdaches 5 am Chassis 1 sind vorzugsweise in einen Rahmen 23 der Frontscheibe 8 integriert. Die Halterung 20, an der das Schutzdach 5 verschiebbar geführt ist, ist hier vorzugsweise an diesen Rahmen 23 angelenkt. Im Übrigen gelten die vorstehenden Ausführungen zu den vorstehend beschrieben Ausführungsbeispielen entsprechend.

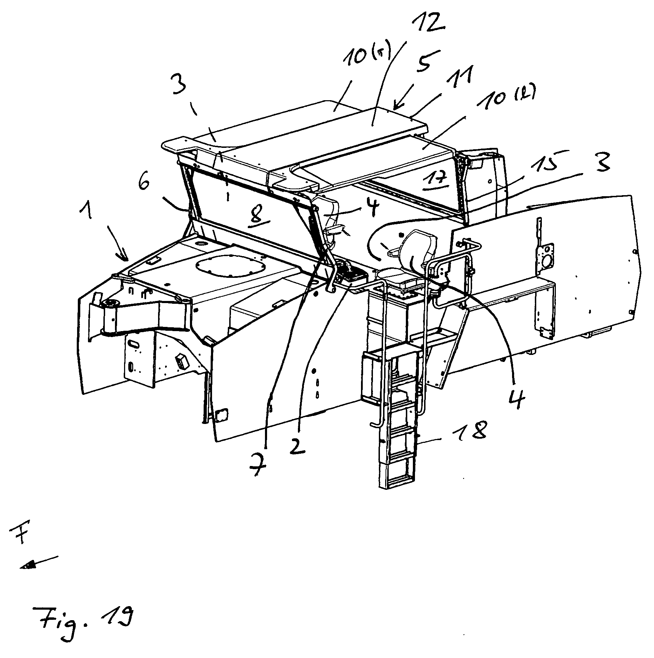

Weist die Straßenbaumaschine ein rechtes und ein linkes Bedienpult 2 auf, kann das Dachsegment 10 an beiden Seiten des Schutzdaches 5 ausgebildet sein. Fig. 19 zeigt eine Ansicht eines an dem Chassis 1 befestigten Schutzdaches 5 mit Dachschalensegmenten 10(l) und 10(r) für einen links und/oder rechts gesteuerten Betrieb einer Straßenbaumaschine. Abweichend von dem in Fig. 1 dargestellten Ausführungsbeispiel sind links und rechts verschiebbare Dachschalensegmente 10(l) und 10(r) als Schutzdachabschnitte vorgesehen, um einen Freiraum 9 bei abgesenktem Schutzdach 5 im Bereich des linken als auch eines rechten Bedienpultes 2 vor einem Fahrersitz 4 ausbilden zu können.

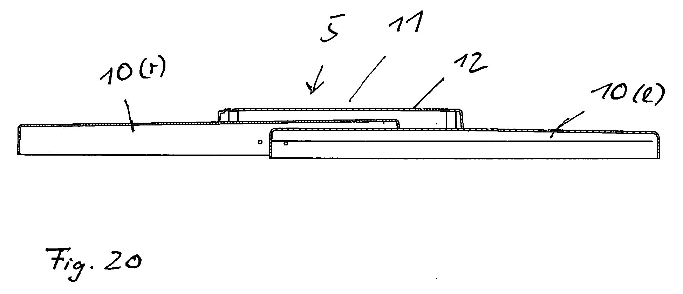

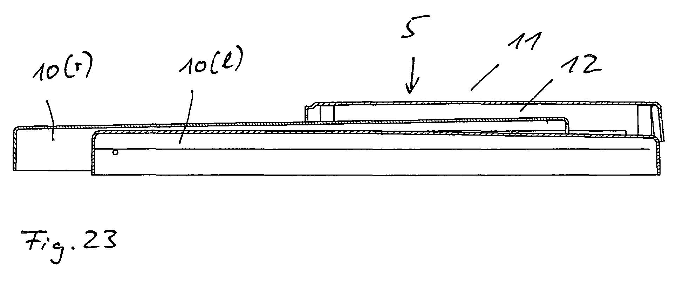

Fig. 20 bis Fig. 23 zeigen Querschnitte des Schutzdaches gemäß Fig. 19 mit verschiedenen Stellungen der Dachschalensegmente 12, 10(l) und 10(r) der Dachschale 11 des Schutzdaches 5, die auf unterschiedlichen Ebenen angeordnet sind und seitlich zueinander verschiebbar angeordnet sind. Die Fig. 20 zeigt das Schutzdach 5, wie es in Fig. 19 in perspektivischer Ansicht dargestellt ist. Die beiden Dachschalensegmente 10(l) und 10(r) bilden mit einem mittleren Dachschalensegment 12 ein Schutzdach 5, dessen seitliche Ausdehnung den Führerstand 3 überdeckt. Das mittlere Dachschalensegment 12 ist hier vorzugsweise feststehend angeordnet, was jedoch nicht zwingend erforderlich ist.

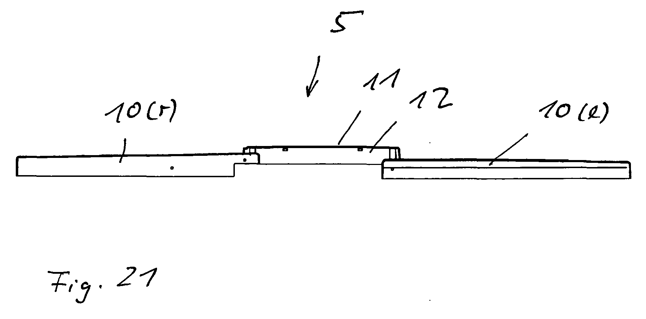

Gemäß Fig. 21 sind die beiden randseitigen Dachschalensegmente 10(l) und 10(r) seitlich herausgeschoben gegenüber dem mittleren Dachschalensegment 12, um die Breite des Schutzdaches 5 zu vergrößern. Vorzugsweise die Einstiege 18, 19 können dann von den Dachschalensegmenten 10(l) und 10(r) auch abgedeckt werden.

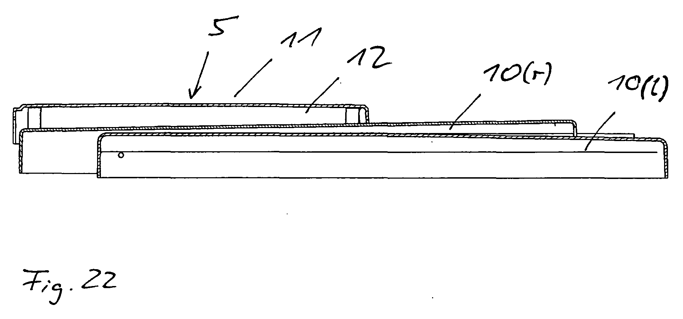

Die Positionierung gemäß Fig. 22 unterscheidet sich von der gemäß Fig. 20 dadurch, dass das eine Dachschatensegment 10(r) eingeschoben ist, um bei abgesenktem Schutzdach 5 den Freiraum 9 für die Bedienperson im Bereich des Bedienpultes 2 zu schaffen, z.B. hier für ein Rechtsbedienpult. Durch die Wahl der Breite der Dachschalensegmente 10(r) und 10(l) kann es zu einer teilweisen Überdeckung der beiden Dachschalensegmente 10(r) und 10(l) kommen, wie Fig. 22 zeigt. Entsprechendes gilt für ein Verschieben des Dachschalensegmentes 10(l), um bei abgesenktem Schutzdach 5 einen Freiraum 9 für die Bedienperson im Bereich des Bedienpultes 2 zu schaffen, z.B. für ein Linksbedienpult. Im Übrigen gelten die vorstehenden Ausführungen zu den vorstehend beschrieben Ausführungsbeispielen entsprechend.

Gemäß einem nicht dargestellten Ausführungsbeispiel der Erfindung kann das Schutzdach 5 eine Mehrzahl Dachschalensegmente aufweisen, die lamellenartig geführt zusammenschiebbar sind zur Ausbildung des Freiraumes 9 in dem eingeklappten Zustand des Schutzdaches 5.

Für alle vorstehend beschriebenen Ausführungsbeispiele gilt, dass verschiedene Antriebe für das Verstellen des Schutzdaches 5 eingesetzt werden können. Neben einer manuellen Betätigung ist vorzugsweise ein elektrischer, pneumatischer oder hydraulischer Antrieb zum Verstellen des Schutzdaches 5 vorgesehen.

## Patentansprüche

1. Straßenbaumaschine mit einem fahrbaren Chassis (1), an dem ein ein Bedienpult (2) aufweisender Führerstand (3) vorgesehen ist, oberhalb dem ein Schutzdach (5) angeordnet ist, das mit mindestens einer Stütze (6) am Chassis (1) festgelegt ist, wobei mindestens eine Stütze (6) verstellbar am Chassis (1) angeordnet ist, so dass das Schutzdach (5) für eine Transportstellung absenkbar und für eine Arbeitsstellung aufstellbar ist, **dadurch gekennzeichnet, dass** das abgesenkte Schutzdach (5) für eine Arbeitsstellung mit verminderter Aufbauhöhe einen Freiraum (9) für eine Bedienperson im Bereich des Bedienpultes (2) des Führerstandes (3) ausbildet, wozu ein das Bedienpult (2) überdeckender Schutzdachabschnitt relativ zum Chassis (1) verschiebbar ausgebildet ist und das Schutzdach (5) Dachschalensegmente (10, 12, 13) aufweist, die auf unterschiedlichen Führungsebenen verschiebbar angeordnet sind.

2. Straßenbaumaschine nach Anspruch 1, **dadurch gekennzeichnet, dass** das Schutzdach (5) mit beidseitigen Stützen (6, 7) schwenkbar am Chassis (1) angeordnet ist, so dass das Schutzdach (5) für eine Transportstellung einklappbar und für eine Arbeitsstellung ausklappbar ist.

3. Straßenbaumaschine nach Anspruch 1, **dadurch gekennzeichnet, dass** das Schutzdach (5) über mindestens eine teleskopierbare Stütze (6) absenkbar und aufstellbar ist.

4. Straßenbaumaschine nach einem der Ansprüche 1 bis 3, **dadurch gekennzeichnet, dass** der das Bedienpult (2) überdeckende Schutzdachabschnitt ein Dachschalensegment (10) ist.

5. Straßenbaumaschine nach einem der Ansprüche 1 bis 4, **dadurch gekennzeichnet, dass** das Schutzdach (5) über ein Verschieben des überdeckenden Schutzdachabschnitts seitlich verkürzbar ist.

6. Straßenbaumaschine nach einem der Ansprüche 1 bis 5, **dadurch gekennzeichnet, dass** das Schutzdach (5) über ein Verschieben des überdeckenden Schutzdachabschnitts seitlich verlängerbar ist.

7. Straßenbaumaschine nach einem der Ansprüche 1 bis 6, **dadurch gekennzeichnet, dass** die wirksamen seitlichen Dachlängen quer zur Fahrtrichtung (F) ausgerichtet sind.

8. Straßenbaumaschine nach einem der Ansprüche 1 bis 7, **dadurch gekennzeichnet, dass** das Schutzdach (5) eine mindestens dreiteilige Dachschale (11) aufweist, deren Dachschalensegmente (10, 12, 13) übereinander verschiebbar angeordnet sind.

9. Straßenbaumaschine nach einem der Ansprüche 1 bis 8, **dadurch gekennzeichnet, dass** das Schutzdach (5) eine Mehrzahl Dachschalensegmente aufweist, die lamellenartig geführt zusammenschiebbar sind.

10. Straßenbaumaschine nach einem der Ansprüche 1 bis 9, **dadurch gekennzeichnet, dass** mindestens ein mittleres Dachschalensegment (12) der Dachschale (11) feststehend angeordnet ist, gegenüber dem seitlich verschiebbar angeordnete Dachschalensegmente (10, 12, 13) angeordnet sind.

## Claims

1. Road-building machine comprising a drivable chassis (1) on which a driver's cab (3) having a control panel (2) is provided, above which a canopy (5) is set up which is fixed on the chassis (1) by at least one support (6) wherein at least one support (6) is set up adjustably on the chassis (1) so that the canopy (5) can be lowered for a transport position and set up for a working position, **characterized in that** for a working position with reduced set-up height the lowered canopy (5) forms a free space (9) for an operator in the region of the control panel (2) of the driver's cab (3), for which a canopy section covering the control panel (2) is designed so as to be displaceable relative to the chassis (1) and the canopy (5) has roof shell segments (10, 12, 13) which are arranged so as to be displaceable on different guide levels.

2. Road-building machine according to Claim 1 **characterized in that** the canopy (5) is arranged with supports (6,7) on both sides for swivel movement on the chassis (1) so that the canopy (5) can be retracted for a transport position and folded out for a working position.

3. Road-building machine according to Claim 1 **characterized in that** the canopy (5) can be lowered and set up by at least one telescopic support (6).

4. Road-building machine according to one of Claims 1 to 3 **characterized in that** the canopy section covering the control panel (2) is a roof shell segment (10).

5. Road-building machine according to one of Claims 1 to 4 **characterized in that** the canopy (5) can be shortened at the sides by displacing the covering canopy section.

6. Road-building machine according to one of Claims 1 to 5 **characterized in that** the canopy (5) can be extended sideways by displacing the covering canopy section.

7. Road-building machine according to one of Claims 1 to 6 **characterized in that** the active lateral roof lengths are aligned transversely to the driving direction (F).

8. Road-building machine according to one of Claims 1 to 7 **characterized in that** the canopy (5) has an at least three-part roof shell (11) whose roof shell segments (10, 12, 13) are arranged so as to be displaceable one above the other.

9. Road-building machine according to one of Claims 1 to 8 **characterized in that** the canopy (5) has a number of roof shell segments which can be pushed together like slats.

10. Road-building machine according to one of Claims 1 to 9 **characterized in that** at least one middle roof shell segment (12) of the roof shell (11) is arranged fixed, relative to which roof shell segments (10, 12, 13) are arranged for lateral displacement.

## Revendications

1. Machine pour travaux routiers comprenant un châssis (1) mobile sur lequel est agencé un poste de conduite (3) comprenant un tableau de contrôle (2) au-dessus duquel est prévu un protège conducteur (5) qui est fixé sur le châssis (1) par au moins un support (6), dans lequel au moins un support (6) est agencé de manière ajustable sur le châssis (1) de manière que le protège conducteur (5) peut être abaissé pour une position de transport et mis en place pour une position de travail, **caractérisée en ce que** pour une position de travail avec une hauteur de mise en place réduite le protège conducteur (5) abaissé forme un espace libre (9) pour un opérateur dans la région du tableau de contrôle (2) du poste de conduite (3), une partie du protège conducteur couvrant le tableau de contrôle (2) étant agencée pour être déplaçable par rapport au châssis, le protège conducteur (5) présentant des segments de coque de toit (10,12, 13) qui sont agencés pour être déplaçables sur différents niveaux de guidage.

2. Machine pour travaux routiers selon la revendication 1, **caractérisée en ce que** le protège conducteur (5) est agencé pour pivoter sur le châssis (1) avec des supports (6, 7) prévus sur deux côtés afin que le protège conducteur (5) puisse être replié dans une position de transport et déplié dans une position de travail.

3. Machine pour travaux routiers selon la revendication 1, **caractérisée en ce que** le protège conducteur (5) peut être abaissé et mis en place via au moins un support télescopique (6).

4. Machine pour travaux routiers selon l'une des revendications 1 à 3, **caractérisée en ce que** la partie du protège conducteur couvrant le tableau de contrôle (2) est un segment de coque de toit (10).

5. Machine pour travaux routiers selon l'une des revendications 1 à 4, **caractérisée en ce que** le protège conducteur (5) peut être raccourci latéralement en déplaçant la partie couvrante du protège conducteur.

6. Machine pour travaux routiers selon l'une des revendications 1 à 5, **caractérisée en ce que** le protège conducteur (5) peut être allongé latéralement en déplaçant la partie couvrante du protège conducteur.

7. Machine pour travaux routiers selon l'une des revendications 1 à 6, **caractérisée en ce que** les longueurs de toit latérales actives sont alignées transversalement à la direction d'avancement (F).

8. Machine pour travaux routiers selon l'une des revendications 1 à 7, **caractérisée en ce que** le protège conducteur (5) comprend une coque de toit (11) en au moins trois parties dont les segments de coque de toit (10, 12, 13) sont agencés pour être déplaçables les uns au-dessus des autres.

9. Machine pour travaux routiers selon l'une des revendications 1 à 8, **caractérisée en ce que** le protège conducteur (5) comprend une pluralité de segments de coque de toit qui peuvent être poussés ensemble comme des lamelles.

10. Machine pour travaux routiers selon l'une des revendications 1 à 9, **caractérisée en ce qu'**au moins un segment de coque de toit médian (12) de la coque de toit (11) est fixe et par rapport auquel des segments de coque de toit (10, 12, 13) sont agencés pour un déplacement latéral.
